(19) Europäisches Patentamt
European Patent Office
Office européen des brevets

(11) **EP 3 503 003 A1**

(12) **EUROPEAN PATENT APPLICATION**
published in accordance with Art. 153(4) EPC

(43) Date of publication:
**26.06.2019 Bulletin 2019/26**

(51) Int Cl.:
***G06Q 30/02*** (2012.01)

(21) Application number: **16913536.5**

(22) Date of filing: **19.08.2016**

(86) International application number:
**PCT/JP2016/074274**

(87) International publication number:
**WO 2018/034008 (22.02.2018 Gazette 2018/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Costa Azul Inc.**
**Tokyo 132-0035 (JP)**

(72) Inventors:
• **HANDA, Toshihiro**
**Tokyo 132-0035 (JP)**
• **NAKAMURA, Yutaka**
**Tokyo 132-0035 (JP)**

(74) Representative: **Becker Kurig Straus**
**Patentanwälte**
**Bavariastrasse 7**
**80336 München (DE)**

(54) **POINT EXCHANGE SYSTEM AND POINT EXCHANGE METHOD**

(57) The point exchange system according to the present invention enables exchange between different types of points. This system is provided with: a conversion parameter storage unit that stores a conversion parameter corresponding to a business category or a business condition; a conversion parameter setting means that sets a conversion parameter for each type of point; an actual performance data acquisition means that acquires actual performance data corresponding to a conversion parameter; an equivalent point conversion means that converts each type of point into an equivalent point on the basis of the actual performance data; and an exchange means that executes an exchange on the basis of the equivalent point.

FIG. 2

EP 3 503 003 A1

**Description**

TECHNICAL FIELD

The present disclosure relates to a point exchange system configured to perform exchange of different points by using an electronic calculating device connected to a network, and to a point exchange method which can be implemented with the system.

BACKGROUND ART

As a part of marketing toward clients, point services have become popular, where points are issued on the basis of original rules and regulations, and such points can be used to be exchanged with certain products or services or to make payment, at a predetermined rate. Popular examples of such point services include: a frequent-flyer point program offered by an airline; and a hotel point program offered by a timeshare operator. For such point services, electronic calculating devices are used in various industries in order to handle the complex point management smoothly and accurately.

In typical point services, usage of points issued to clients is limited to exchange with products/services or payment of the purchase price particularly specified by the operator. However, in recent years, some exchange business operators are beginning to provide common points which can be exchanged with a wider range of products/services, or services where points can be exchanged with media of asset value, such as electronic currency and virtual currency. Such exchange operators run point exchange services. For example, in a point exchange service, hotel points operated by respective timeshare operators are mutually bartered.

Patent Documents 1 and 2 disclose examples of techniques related to this type of point exchange. Patent Document 1 discloses common points with enhanced values. More specifically, the proposed common points never expire and can be exchanged for various points at set exchange rates, and thus these virtual common points are branded and can be utilized as savings. Patent Document 2 discloses a technique related to a point exchange processing device that determines the value of the point that can be exchanged for a product, on the basis of the market price of the product.

Citation List

Patent Literature

 Patent Document 1: JP 2004-78342A
 Patent Document 2: JP 2014-137789A

SUMMARY

Problems to be Solved

Points used in each point service are basically usable in independent transactions within the service system using the points. Nevertheless, some points can be mutually exchanged as described above. While common points are used in Patent Document 1 for such exchange as media that mediate different points, there is no basis supporting the equivalence of the exchange rate involved in the exchange between the common points and a product. In other words, the exchange rate is arbitrary determined by an entity managing the common points, and thus exchange that is equivalent to both parties is not realized, and there may be a disadvantage due to shortage depending on the situation.

Patent Document 2 discloses a point exchange processing device that determines the exchange value of points to be exchanged on the basis of the market price of the product to be exchange with the points. However, still, the point exchange is performed using the market prince that indicates nothing more than an asking price from a seller, and thus equivalence of points is not guaranteed in such transactions.

As described above, in the typical point exchanges, whether it is barter trade, or it is exchange via common points, there is no sufficient basis for the equivalence of the exchange rate. Particularly, point services are recently spreading through various industries, and there is a problem of realizing equivalent exchange of points that belong to different industries.

At least one embodiment of the present invention was made in view of the above, and an object of at least one embodiment of the present invention is to provide a point exchange system whereby exchange transactions among different points can be performed fairly and smoothly, and a point exchange method that can be implemented with the system.

Solution to the Problems

(1) According to at least one embodiment of the present invention, a point exchange system configured to exchange points which are different from one another by utilizing an electronic calculation device connected to a network, includes: a conversion-parameter storage part configured to store a plurality of conversion parameters corresponding to a plurality of business types or business categories; a conversion-parameter setting unit configured to set a conversion parameter corresponding to the respective points by selecting the conversion parameter from the plurality of conversion parameters; a record-data acquisition unit configured to acquire record data corresponding to the conversion parameter set by the conversion-parameter setting unit; an equivalent-point conversion unit configured to convert the respective points to equivalent points on the basis of the record data acquired by the record-data acquisition unit; and an exchange unit configured to perform exchange on the basis of the equivalent points.

With the above configuration (1), a plurality of conversion parameters used in conversion for equivalent exchange of different points are prepared in advance in the conversion-parameter storage part for each business type or category. Such conversion parameter is selected on the basis of the business type or category to which the point to be exchanged pertains, and is converted to an equivalent point on the basis of record data corresponding to the business type or category. As described above, the point to be exchanged is equivalently converted on the basis of the parameter record value corresponding to the business type or category to which the point pertains, and thus it is possible to perform exchange transaction between different points fairly and smoothly.

(2) In some embodiments, in the above configuration (1), the record data includes past operation record related to a product or a service which is exchangeable with each of the points.

With the above configuration (2), it is possible to convert the points to equivalent points on the basis of past operation record. In such exchange, it is possible to reflect the current true value of the points quantitatively on the basis of past record, and thus it is possible to operate the points stably.

(3) In some embodiments, in the above configuration (1), the record data includes prediction of future operation related to a product or a service which is exchangeable with each of the points.

With the above configuration (3), it is possible to convert the points to equivalent points on the basis of prediction of future operation. In such exchange, it is possible to reflect the true value of the points that would change in future quantitatively on the basis of prediction of future operation, and thus it is possible to operate the points speculatively.

(4) In some embodiments, in any one of the above configurations (1) to (3), the conversion-parameter storage part is configured to store a plurality of conversion parameters for each of the plurality of business types or business categories.

With the above configuration (4), conversion to equivalent points is performed on the basis of a plurality of record data corresponding to the plurality of conversion parameters for each point. Thus, compared to a case where conversion is based on a single conversion parameter, it is possible to perform equivalent exchange more reliably.

(5) In some embodiments, in the above configuration (4), the conversion-parameter storage part is configured to store a plurality of conversion parameters which belong to different perspectives, for each of the plurality of business types or business categories.

With the above configuration (5), conversion to equivalent points is performed on the basis of record data corresponding to the plurality of parameters of different perspectives for each point. Thus, compared to a case where conversion is based on a conversion parameter of a single perspective, it is possible to perform equivalent exchange more reliably.

(6) In some embodiments, in any one of the above configurations (1) to (5), the equivalent-point conversion unit is configured to convert the equivalent points by standardizing the record data and multiplying the respective points by the standardized record data.

With the above configuration (6), even in a case where the plurality of conversion parameters used in conversion of the equivalent points have different dimensions, it is possible to convert the equivalent points through a common arithmetic expression regardless of the type of the conversion parameters, by multiplying each point by standardized conversion parameters.

(7) In some embodiments, in any one of the above configurations (1) to (6), the point exchange system further includes a correction unit configured to correct the equivalent points on the basis of disturbance factors related to the respective points.

With the above configuration (7), the converted equivalent points are corrected on the basis of disturbance factors. In real transactions, various factors not directly related to points (disturbance factors such as exchange fluctuations and political situation) may affect the equivalence. With this configuration, by taking account of such various influences as disturbance factors, it is possible to perform equivalent exchange while managing risks.

(8) In some embodiments, in any one of the above configurations (1) to (7), the record-data acquisition unit may be configured to acquire the record data from big data.

(9) According to at least one embodiment of the present invention, a point exchange method of exchanging points which are different from one another by utilizing an electronic calculation device connected to a network includes: storing in advance a plurality of conversion parameters corresponding to a plurality of business types or business categories; setting a conversion parameter corresponding to the respective points by selecting the conversion parameter from the plurality of conversion parameters; acquiring record data corresponding to the set conversion parameter; converting the respective points to equivalent points on the basis of the acquired record data; and performing exchange on the basis of the converted equivalent points.

The above method (9) can be suitably implemented with the above described point exchange system (according to the various configurations described above).

Advantageous Effects

According to at least one embodiment of the present invention, it is possible to provide a point exchange system whereby exchange transactions among different points can be performed fairly and smoothly, and a point exchange method that can be implemented with the system.

BRIEF DESCRIPTION OF DRAWINGS

FIG. 1 is a schematic diagram illustrating a configuration of a point exchange system according to at least one embodiment of the present invention.
FIG. 2 is a block diagram illustrating a functional configuration of the point exchange system in FIG. 1.
FIG. 3 is an example of conversion parameters stored in the conversion-parameter storage part in FIG. 2.
FIG. 4 is a flowchart illustrating steps of a point exchange method implemented with the point exchange system illustrated in FIG. 1.

DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.
For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.
Further, for instance, an expression of a shape such as a rectangular shape or a cylindrical shape shall not be construed as only the geometrically strict shape, but also includes a shape with unevenness or chamfered corners within the range in which the same effect can be achieved.
On the other hand, an expression such as "comprise", "include", "have", "contain" and "constitute" are not intended to be exclusive of other components.

[1. Overall configuration]

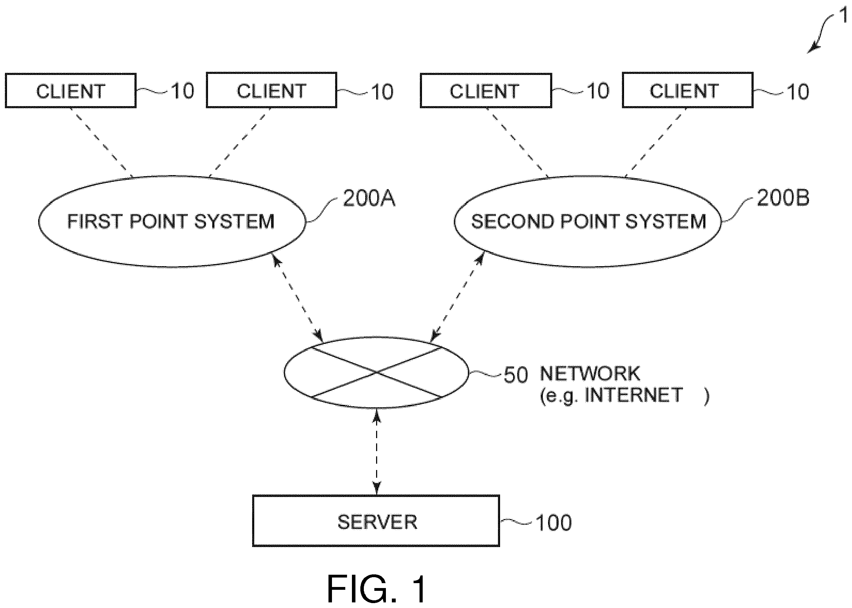

FIG. 1 is a schematic diagram illustrating a configuration of a point exchange system (hereinafter, also referred to as "system") 1 according to at least one embodiment of the present invention.
The system 1 includes a server 100, and at least one point system 200 that clients 10 can use. The server 100 and the point system 200 are mutually communicable via a network 50.
In the present embodiment, to simplify the description, the at least one point system 200 includes the first point system 200A and the second point system 200B communicable with the server 100 via the network 50.
The server 100 is an electronic calculation device with a software installed therein. The software is for performing the point exchange method (described below) according to the present embodiment. The server 100 is an electronic transaction system configured to exchange different points used in the respective point systems 200. The term "exchange" refers to mutual trading of the respective points used in the different point systems 200.
Each point system 200 is an independent business transaction system that operates points provided by a plurality of point providers or a single point provider. The term "point provider" refers to a natural person or a corporation that is registered in the point exchange system 1 in advance, and that provides points by themselves in each point system 200.
The points handled in each point system 200 include "original points" and "provisional points". The term "original point" refers to a point provided (issued) by the point provider. Examples of the original point include: a point that can be exchanged for a point target exclusively; and a point that can be exchanged for a medium with a widely acknowledged asset value such as a virtual currency at a predetermined rate. For example, when the original point is the frequent-flyer point or the hotel point, the point target is an airplane ticket that can be exchanged for the frequent-flyer point, a hotel coupon, or the like. For example, business operators as the point providers provide the original points as a special consumer benefit as a part of sales promotion using a point card or by providing a hotel stay ownership of a timeshare resort.
The "provisional point" is issued to a product or a service provided by a product-providing business operator for the sake of management by the system 1, and is not necessarily exchanged for the original point. The term "product-providing business operator" indicates a natural person or a corporation, registered in the point exchange system in advance. This business operator does not provide (issue) the original points by themselves, but exchanges or sells their own product or service with the original points provided by point providers different from the business operator. A product with the provisional point is supposed to be capable of being sold and bought with something other than the original point. With the provisional point defined by the system, a product provider that does not issue the original point can perform mutual trade of their product and the original point provided by the point provider. Thus, the provisional point is used for direct mutual trade and exchange of the original point and the product.

[2. System functional configuration]

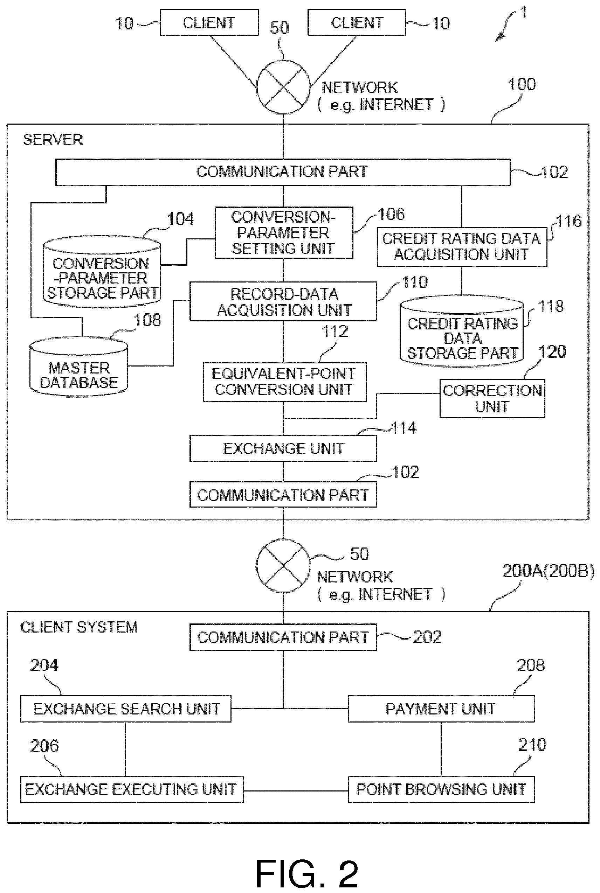

Next, the configuration of the above described system 1 will be described in detail. FIG. 2 is a block diagram illustrating the functional configuration of the system 1 in FIG. 1.

Each of the server 100 and the point system 200 basically includes an electronic calculation device including an input device, a storage device, a calculation device, and an output device. However, herein, only the configuration related to implement of the point exchange method is shown as functional blocks.

The server 100 includes a communication part 102 that is communicable with an external system (e.g. point system 200) via a network 50 by sending and receiving various kinds of data, a conversion-parameter storage part 104 configured to store a plurality of conversion parameters corresponding to a plurality of business types or business categories, a conversion-parameter setting unit 106 configured to set a conversion parameter corresponding to respective points by selecting from the plurality of conversion parameters stored in the conversion-parameter storage part 104, a master database 108 configured to store record data related to the point system 200, a record-data acquisition unit 110 configured to acquire record data set by the conversion-parameter setting unit 106 from the master database 108, an equivalent-point conversion unit 112 configured to exchange each point to an equivalent point on the basis of record data acquired by the record-data acquisition unit 110, and an exchange unit 114 configured to perform exchange on the basis of the equivalent point.

The conversion-parameter storage part 104 stores a plurality of conversion parameters corresponding to a plurality of business types or business categories in advance. The conversion parameters are calculation parameters used to convert points used in each point system 200 to equivalent points. The conversion parameters are set for each business type/category, and thereby enable equivalent exchange between various products and services.

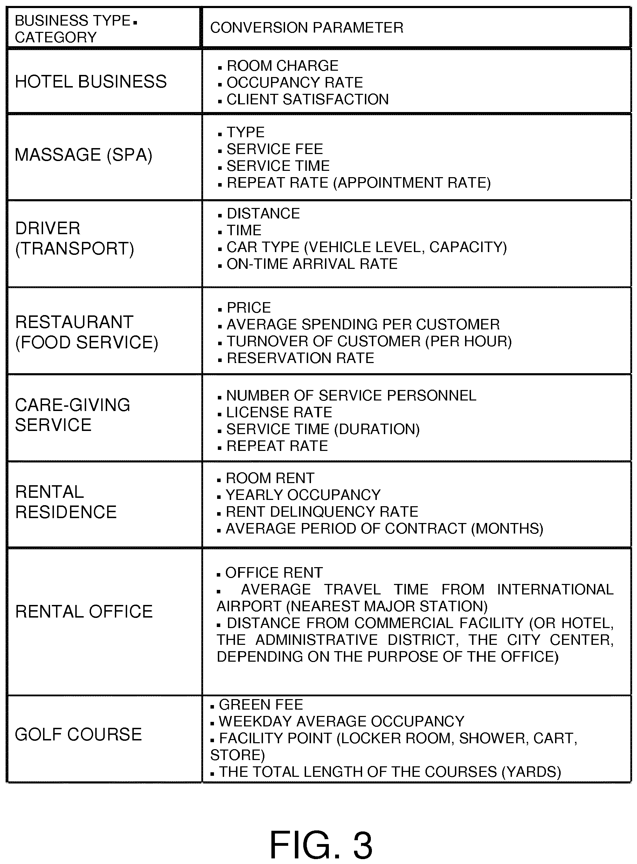

The conversion parameter is determined on the basis of the industry to which point providers and a point target object pertain, the product characteristics, a special circumstance of each corporation that needs to be taken into consideration, transition of past sales and various profits, the number of clients, and the number of point users and the scale of their use of the points. FIG. 3 is an example of conversion parameters stored in the conversion-parameter storage part 104 in FIG. 2.

For the business type/category "hotel business", the conversion parameters include "room charge", "occupancy rate", and "client satisfaction". For the business type/category "massage (spa)", the conversion parameters include "type", "service fee", "service time", and "repeat rate (appointment rate)". For the business type/category "driver (transport)", the conversion parameters include "distance", "time", "car type (vehicle level, capacity)", and "on-time arrival rate". For the business type/category "restaurant (food service)", the conversion parameters include "price", "average spending per customer", "turnover of customer (per hour)", and "reservation rate". For the business type/category "care-giving", the conversion parameters include "number of service personnel", "license rate", "service time (duration)", and "repeat rate". For the business type/category "rental residence", the conversion parameters include "room rent", "yearly occupancy", "rent delinquency rate", and "average period of contract (months)". For the business type/category "rental office", the conversion parameters include "office rent", "average travel time from an international airport (nearest major station)", and "distance from a commercial facility (or a hotel, the administrative district, the city center, depending on the purpose of the office)". For the business type/category "golf course", the conversion parameters include "green fee", "weekday average occupancy", "facility point (locker room, shower, cart, store)", and "the total length of the courses (yards)".

As described above, in the present embodiment, the conversion-parameter storage part 104 stores a plurality of conversion parameters corresponding to each of the plurality of business types or business categories in advance. Accordingly, conversion to equivalent points is performed on the basis of a plurality of record data corresponding to the plurality of conversion parameters for each point. Thus, compared to a case where conversion is based on a single conversion parameter, it is possible to perform equivalent exchange more reliably.

In particular, the conversion-parameter storage part 104 stores a plurality of conversion parameters of different perspectives, for each of the plurality of industries or business categories in advance. Accordingly, conversion to equivalent points is performed on the basis of record data corresponding to the plurality of parameters of different perspectives for each point. Thus, compared to a case where conversion is based on a conversion parameter of a single perspective, it is possible to perform equivalent exchange more reliably.

The master database 108 stores record data related to the point system 200. Specifically, the master database 108 stores record data of past or future, corresponding to each of the conversion parameters stored in the conversion-parameter storage part 104. The record data stored in the master database 108 may be stored in advance in the master database 108 itself, or may be acquired or updated from outside via the communication part 102. In this case, the record data may be acquired from big data, for instance.

The record data may include, for example, profit data. In an example where the point target is the point usable for the hotel stay issued by a timeshare resort hotel, the term "profit data" indicates data that has a certain level of association with or serves as a basis for calculating the value of the hotel stay, obtained by subtracting cost from a membership fee of the timeshare product, sales from visitors or regular client staying at the hotel, and the like. Alternatively, the profit data is operation profit data obtained by subtracting a certain cost determined in advance from a cost in the data. The profit data includes data including sales gross profit or the operation profit data similarly in a case where the provisional point target is a product on sale.

Further, the server 100 includes a credit rating data acquisition unit 116 for acquiring credit rating data via the communication part 102, and a credit rating data storage part 118 storing credit rating data acquired by the credit rating data acquisition unit 116. Herein, "credit rating data" refers to various types of data required to check credit rating of the clients 10.

Furthermore, the credit rating data may include limitation regarding the type and quantity of exchangeable points, according to the credit rating of each client 10. This limitation may selectively include factors such as the type and combination of points to be exchanged, and the financial conditions and the credit quality of the clients 10.

The server 100 further includes a correction unit 120 configured to correct equivalent points on the basis of disturbance factors related to each point. In real transactions, various factors not directly related to points (disturbance factors such as exchange fluctuations and political situation) may affect the equivalence. With this configuration, by taking account of various influences as disturbance factors, it is possible to perform equivalent exchange while managing risks.

Furthermore, the point system 200 includes a communication part 202, an exchange search unit 204, an exchange executing unit 206, a payment unit 208, and a point browsing unit 210.

The communication part 202 is an interface for communicating with an external system (the server 100 or another point system 200) via the network 50 by sending and receiving various data, similarly to the above communication part 102.

The exchange search unit 204 specifies a user corresponding to the client 10, from a plurality of users registered in the point system 200, and searches the type and quantity of points that the specified user possesses.

The exchange executing unit 206 sends a command for executing the point exchange process to the server 100 via the network 50. The server 100 performs the respective point exchange processing steps subsequently, on the basis of a command from the exchange executing unit 206.

The payment unit 208 is configured to make payment by exchanging the possessing points with a particular product or service within the own point system 200. In other words, the points are exchanged with a particular product or service according to the rule operated independently in the own point system 200, without involving exchange with another point system 200 via the server 100.

The point browsing unit 210 is a display device such as a liquid crystal monitor that displays various indications related to the point exchange processing according to input operation by the client 10, and may also function as an input device like a touch panel. Specifically, the point browsing unit 210 displays various kinds of information required by the clients 10 in each step of the point exchange process, including the search result by the exchange search unit 204, and displays indications necessary for information acquisition or input operation by the clients 10.

[3. Point exchange method]

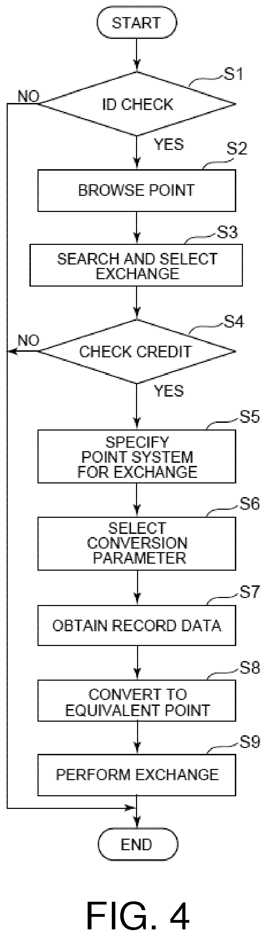

Next, the point exchange method to be performed by the system 1 having the above configuration will be described. FIG. 4 is a flowchart illustrating steps of a point exchange method implemented with the system 1 illustrated in FIG 1.

In the example described below, a client 10 that possesses the first point PI in the first point system 200A uses the product or service that can be exchanged with the second point P2 used in the second point system 200B.

Firstly, a client 10 who is a user of the first point system 200A accesses the server 100 via the network 50 from the first point system 200A, and thereby the process is started. The client 10 inputs identification information such as ID. The input is compared to a user list prepared in advance, and the identity of the client 10 is confirmed (step S1). Further, while browsing the terminal screen with the point browsing unit 210 of the first point system 200A, the client 10 confirms the point that the client 20 possesses and a product or service that is exchangeable by using the exchange search unit 204 (step S2), and searches and selects the possessing point or the product or service that the client 10 wishes to exchange (step S3).

Further, the credit rating data acquisition unit 116 acquires the credit rating data corresponding to the client 10 on the basis of the identification information input in step S1, and performs credit rating check (step S4). As a result of the credit rating check, if it is determined that the credit is not sufficient (step S4: NO), exchange is not performed, and the process is ended (END). On the other hand, as a result of the credit rating check, if it is determined that the credit is sufficient (step S4: YES), the server 100 specifies the second point system 200B as a transaction target of the exchange, from among the plurality of point systems 200 connected to the network 50, on the basis of the product or service selected in step S3.

Next, the conversion-parameter setting unit 106 accesses the conversion-parameter storage part 104 on the basis of the product or the service selected in step S3, and selects a suitable conversion parameter from the conversion parameters stored in the conversion-parameter storage part 104 (step S6). In step S6, the conversion parameter is selected by specifying the business type or business category of the product or the service selected in step S3, and searching a conversion parameter corresponding to the business type or business category in the conversion-parameter storage part 104. Besides the business type and category, the conversion parameter may be selected on the basis of the industry to which point providers and a point target object pertain in the second point system 200B being a transaction target, the product characteristics, a special circumstance of each corporation that needs to be taken into consideration, transition of past sales and various profits, the number of clients, and the number of point users and the scale of their use of the points.

Next, the record-data acquisition unit 110 acquires record data corresponding to the conversion parameter selected in step S6 from the master database 108 (step S7). Further, the equivalent-point conversion unit 112 converts each point to an equivalent point on the basis of record data acquired by the record-data acquisition unit 110 (step S8).

Herein, the equivalent-point conversion unit 112 may convert the equivalent point by standardizing the record data and multiplying each point by the standardized record data. In this case, even in a case where the plurality of conversion parameters used in conversion of the equivalent point have different dimensions, it is possible to convert the equivalent point through a common arithmetic expression regardless of the type of the conversion parameters, by multiplying the point by standardized conversion parameters.

Next, conversion in step S8 will be described in detail. For instance, assume that there are a one-night hotel voucher A (1,000 yen) that can be exchanged at a rate of 1:1 with the first point PI in the first point system 200A and a one-night hotel voucher B (4,000 yen) that can be exchanged at a rate of 1:1 with the second point P2 in the second point system 200B. Herein, the typical conversion rate of the hotel vouchers A and B is "1: 4".

In this case, assume that the conversion-parameter setting unit 106 sets "occupancy rate" as a conversion parameter corresponding to the first point PI and the second point P2. Then, the record-data acquisition unit 110 acquires, as record data, the occupancy rate "90%" of the accommodation facility A subject to usage of the hotel voucher A that can be exchanged with the first point PI, and the occupancy rate "10%" of the accommodation facility B subject to usage of the hotel voucher B that can be exchanged with the second point P2, from the master database 108.

Further, the equivalent-point conversion unit 112 obtains the equivalent point corresponding to the first point from the following expression (1):

$$1000 \times 90 \ (\%) \ / \ 100 \ (\%) = 900 \text{ points}$$

Similarly, the equivalent-point conversion unit 112 obtains the equivalent point corresponding to the second point from the following expression (2):

$$4000 \times 10 \ (\%) \ / \ 100 \ (\%) = 400 \text{ points}$$

Further, in the above expressions (1) and (2), the occupancy rate (%), which is the conversion parameter to be multiplied with the original point, is standardized as "100 (%)".

Next, the exchange unit 114 performs exchange on the basis of the equivalent point converted in step S8 (step S9). As result, the conversion rate in the above example is "9:4", not the typical rate "1: 4".

As described above, according to the present embodiment, a plurality of conversion parameters used in conversion for equivalent exchange of different points are prepared in advance in the conversion-parameter storage part for each business type or category. Such conversion parameter is selected on the basis of the business type or category to which the point to be exchanged pertains, and is converted to an equivalent point on the basis of record data corresponding to the business type or category. As described above, the point to be exchanged is equivalently converted on the basis of the parameter record value corresponding to the business type or category to which the point pertains, and thus it is possible to perform exchange transaction between different points fairly and smoothly.

Industrial Applicability

At least one embodiment of the present invention is applicable to a point exchange system configured to perform exchange of different points by using an electronic calculating device connected to a network, and to a point exchange method which can be implemented with the system.

Description of Reference Numerals

| | |
|---|---|
| 1 | Point exchange system |
| 10 | Client |
| 50 | Network |
| 100 | Server |
| 102, 202 | Communication part |
| 104 | Conversion-parameter storage part |

| 106 | Conversion-parameter setting unit |
| 108 | Master database |
| 110 | Record-data acquisition unit |
| 112 | Equivalent-point conversion unit |
| 114 | Exchange unit |
| 116 | Credit rating data acquisition unit |
| 118 | Credit rating data storage part |
| 120 | Correction unit |
| 200 | Point system |
| 204 | Exchange search unit |
| 206 | Exchange executing unit |
| 208 | Payment unit |
| 210 | Point browsing unit |

**Claims**

1. A point exchange system configured to exchange points which are different from one another by utilizing an electronic calculation device connected to a network, the point exchange system comprising:

   a conversion-parameter storage part configured to store a plurality of conversion parameters corresponding to a plurality of business types or business categories;
   a conversion-parameter setting unit configured to set a conversion parameter corresponding to the respective points by selecting the conversion parameter from the plurality of conversion parameters;
   a record-data acquisition unit configured to acquire record data corresponding to the conversion parameter set by the conversion-parameter setting unit;
   an equivalent-point conversion unit configured to convert the respective points to equivalent points on the basis of the record data acquired by the record-data acquisition unit; and
   an exchange unit configured to perform exchange on the basis of the equivalent points.

2. The point exchange system according to claim 1, wherein
   the record data includes past operation record related to a product or a service which is exchangeable with each of the points.

3. The point exchange system according to claim 1, wherein
   the record data includes prediction of future operation related to a product or a service which is exchangeable with each of the points.

4. The point exchange system according to any one of claims 1 to 3, wherein
   the conversion-parameter storage part is configured to store a plurality of conversion parameters for each of the plurality of business types or business categories.

5. The point exchange system according to claim 4, wherein
   the conversion-parameter storage part is configured to store a plurality of conversion parameters which belong to different perspectives, for each of the plurality of business types or business categories.

6. The point exchange system according to any one of claims 1 to 5, wherein
   the equivalent-point conversion unit is configured to convert the equivalent points by standardizing the record data and multiplying the respective points by the standardized record data.

7. The point exchange system according to any one of claims 1 to 6, further comprising:
   a correction unit configured to correct the equivalent points on the basis of disturbance factors related to the respective points.

8. The point exchange system according to any one of claims 1 to 7, wherein
   the record-data acquisition unit is configured to acquire the record data from big data.

9. A point exchange method of exchanging points which are different from one another by utilizing an electronic calculation device connected to a network, the point exchange method comprising:

   storing in advance a plurality of conversion parameters corresponding to a plurality of business types or business categories;
   setting a conversion parameter corresponding to the respective points by selecting the conversion parameter from the plurality of conversion parameters;
   acquiring record data corresponding to the set conversion parameter;
   converting the respective points to equivalent points on the basis of the acquired record data; and
   performing exchange on the basis of the converted equivalent points.

**Amended claims under Art. 19.1 PCT**

1. A point exchange system configured to exchange points which are different from one another by utilizing an electronic calculation device connected to a network, the point exchange system comprising:

   a conversion-parameter storage part configured to store a plurality of conversion parameters corresponding to a plurality of business types or business categories;

a conversion-parameter setting unit configured to set a conversion parameter corresponding to the respective points by selecting the conversion parameter from the plurality of conversion parameters;

a record-data acquisition unit configured to acquire record data corresponding to the conversion parameter set by the conversion-parameter setting unit;

an equivalent-point conversion unit configured to convert the respective points to equivalent points on the basis of the record data acquired by the record-data acquisition unit; and

an exchange unit configured to perform exchange on the basis of the equivalent points;

wherein the record data includes past operation record related to a product or a service which is exchangeable with each of the points, or prediction of future operation related to a product or a service which is exchangeable with each of the points.

4. The point exchange system according to claim 1, wherein

the conversion-parameter storage part is configured to store a plurality of conversion parameters for each of the plurality of business types or business categories.

5. The point exchange system according to claim 4, wherein

the conversion-parameter storage part is configured to store a plurality of conversion parameters which belong to different perspectives, for each of the plurality of business types or business categories.

6. The point exchange system according to any one of claims 1, 4, or 5, wherein

the equivalent-point conversion unit is configured to convert the equivalent points by standardizing the record data and multiplying the respective points by the standardized record data.

7. The point exchange system according to any one of claims 1, 4, 5, or 6, further comprising:

a correction unit configured to correct the equivalent points on the basis of disturbance factors related to the respective points.

8. The point exchange system according to any one of claims 1, 4, 5, 6 or 7, wherein the record-data acquisition unit is configured to acquire the record data from big data.

9. A point exchange method of exchanging points which are different from one another by utilizing an electronic calculation device connected to a network, the point exchange method comprising:

storing in advance a plurality of conversion parameters corresponding to a plurality of business types or business categories;

setting a conversion parameter corresponding to the respective points by selecting the conversion parameter from the plurality of conversion parameters;

acquiring record data corresponding to the set conversion parameter;

converting the respective points to equivalent points on the basis of the acquired record data; and

performing exchange on the basis of the converted equivalent points;

wherein the record data includes past operation record related to a product or a service which is exchangeable with each of the points, or prediction of future operation related to a product or a service which is exchangeable with each of the points.

FIG. 1

EP 3 503 003 A1

FIG. 2

| BUSINESS TYPE・ CATEGORY | CONVERSION PARAMETER |
|---|---|
| HOTEL BUSINESS | ▪ ROOM CHARGE<br>▪ OCCUPANCY RATE<br>▪ CLIENT SATISFACTION |
| MASSAGE (SPA) | ▪ TYPE<br>▪ SERVICE FEE<br>▪ SERVICE TIME<br>▪ REPEAT RATE (APPOINTMENT RATE) |
| DRIVER (TRANSPORT) | ▪ DISTANCE<br>▪ TIME<br>▪ CAR TYPE (VEHICLE LEVEL, CAPACITY)<br>▪ ON-TIME ARRIVAL RATE |
| RESTAURANT (FOOD SERVICE) | ▪ PRICE<br>▪ AVERAGE SPENDING PER CUSTOMER<br>▪ TURNOVER OF CUSTOMER (PER HOUR)<br>▪ RESERVATION RATE |
| CARE-GIVING SERVICE | ▪ NUMBER OF SERVICE PERSONNEL<br>▪ LICENSE RATE<br>▪ SERVICE TIME (DURATION)<br>▪ REPEAT RATE |
| RENTAL RESIDENCE | ▪ ROOM RENT<br>▪ YEARLY OCCUPANCY<br>▪ RENT DELINQUENCY RATE<br>▪ AVERAGE PERIOD OF CONTRACT (MONTHS) |
| RENTAL OFFICE | ▪ OFFICE RENT<br>▪ AVERAGE TRAVEL TIME FROM INTERNATIONAL AIRPORT (NEAREST MAJOR STATION)<br>▪ DISTANCE FROM COMMERCIAL FACILITY (OR HOTEL, THE ADMINISTRATIVE DISTRICT, THE CITY CENTER, DEPENDING ON THE PURPOSE OF THE OFFICE) |
| GOLF COURSE | ▪ GREEN FEE<br>▪ WEEKDAY AVERAGE OCCUPANCY<br>▪ FACILITY POINT (LOCKER ROOM, SHOWER, CART, STORE)<br>▪ THE TOTAL LENGTH OF THE COURSES (YARDS) |

# FIG. 3

FIG. 4

## INTERNATIONAL SEARCH REPORT

| | International application No. |
|---|---|
| | PCT/JP2016/074274 |

**A. CLASSIFICATION OF SUBJECT MATTER**
*G06Q30/02(2012.01)i*

According to International Patent Classification (IPC) or to both national classification and IPC

**B. FIELDS SEARCHED**

Minimum documentation searched (classification system followed by classification symbols)
G06Q30/02

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-157797 A  (Yugen Kaisha Unicorn), 16 June 2005 (16.06.2005), paragraphs [0005] to [0010], [0038] to [0040] (Family: none) | 1-9 |
| A | JP 2009-48591 A  (Nomura Research Institute, Ltd.), 05 March 2009 (05.03.2009), entire text (Family: none) | 1-9 |
| A | WO 2006/043330 A1  (Softbank BB Corp.), 27 April 2006 (27.04.2006), entire text & US 2007/0185772 A1    & CN 101069202 A | 1-9 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 August 2016 (30.08.16) | 06 September 2016 (06.09.16) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**EP 3 503 003 A1**

**Patent documents cited in the description**

- JP 2004078342 A
- JP 2014137789 A